# EUROPÄISCHE PATENTSCHRIFT

(11) **EP 2 807 384 B1**
(45) Veröffentlichungstag und Bekanntmachung des Hinweises auf die Patenterteilung: **11.03.2020**
(21) Anmeldenummer: 13701997.2
(22) Anmeldetag: 24.01.2013
(51) Int. Cl.: F16C 7/08, B60S 1/24, F16C 11/06, B60G 7/00

(54) **GELENKSTANGE**
JOINT ROD
BARRE ARTICULÉE

(30) Priorität: 25.01.2012 DE 102012201062
(43) Veröffentlichungstag der Anmeldung: 03.12.2014
(73) Patentinhaber: Robert Bosch GmbH, 70442 Stuttgart (DE)
(72) Erfinder: TRENKLE, Lothar, 77815 Buehl (DE)
(86) Internationale Anmeldenummer: PCT/EP2013/051303
(87) Internationale Veröffentlichungsnummer: WO 2013/110690

(56) Entgegenhaltungen:
- WO-A1-2008/089911
- DE-A1- 2 322 253
- DE-U1- 29 614 638
- US-A- 3 861 812
- US-A1- 2008 235 895

## Beschreibung

Die vorliegende Erfindung betrifft eine Gelenkstange, insbesondere für eine Scheibenwischvorrichtung eines Kraftfahrzeugs. Weiterhin betrifft die Erfindung ein Verfahren zum Herstellen einer Gelenkstange, insbesondere für eine Scheibenwischvorrichtung.

### Stand der Technik

Gelenkstangen für Scheibenwischvorrichtungen von Kraftfahrzeugen sind bekannt. Diese sind beispielsweise als rohrförmige Gelenkstangen ausgebildet, bei denen Kopfenden platt gedrückt sind, wobei in die Kopfenden Löcher eingestanzt und in die Löcher Kunststoff-Kugelschalen eingespritzt sind. Mittels der Kugelschalen werden Kugelbolzen bzw. -zapfen für ein Gestänge der Scheibenwischvorrichtung geführt.

Aufgrund der teilweise sehr langen Gelenkstangen kann eine Herstellung der herkömmlichen Gelenkstangen sehr aufwendig sein, weil zu einer Bearbeitung aufwendige Bearbeitungsprozesse erforderlich sind. Unter anderem muss die relativ lange Gelenkstange zur Ausbildung der Kugelschalen jedes Mal in ein Kunststoff-Spritzwerkzeug eingelegt werden. Dadurch ergeben sich nachteilig lange Taktzeiten zwischen den einzelnen Bearbeitungsschritten aufgrund einer umständlichen Handhabung.

WO 2008/089911 A1 offenbart eine Gelenkstange für eine Scheibenwischvorrichtung, wobei eine Kugelschale im Wesentlichen radial zu einer seitlich offenen Lageröffnung der Gelenkstange montiert wird.

Weiterer Stand der Technik ist aus der US 2008/0235895 A1 bekannt.

Offenbarung der Erfindung Es ist daher die Aufgabe der vorliegenden Erfindung, eine einfacher herzustellende Gelenkstange bereitzustellen.

Die Aufgabe wird erfindungsgemäß mit den Merkmalen des Anspruchs 1 gelöst.

Vorteilhaft ist ein Herstellungsprozess für die erfindungsgemäße Gelenkstange stark vereinfacht. Er besteht nämlich im Wesentlichen lediglich darin, separiert vorgefertigte Kugelschalen in flächig ausgebildeten Endabschnitten der rohrförmigen Gelenkstange zu fixieren. Mit dem rohrförmigen Grundmaterial der Gelenkstange steht ein kostengünstiges Material zur Verfügung, das ein sehr gutes Verhältnis zwischen Steifigkeit und Materialeinsatz aufweist. Im Ergebnis ist vorteilhaft eine sehr kosteneffiziente Herstellung der erfindungsgemäßen Gelenkstange möglich.

Eine bevorzugte Ausführungsform der erfindungsgemäßen Gelenkstange ist dadurch gekennzeichnet, dass die Gelenkstange metallisch ausgebildet ist. Durch das metallische Rohrmaterial steht ein kostengünstiges Grundmaterial zur Fertigung der Gelenkstange zur Verfügung. Eine hohe Gestaltungsvielfalt für die Gelenkstange ist aufgrund der günstigen Materialeigenschaften des Rohrmaterials vorteilhaft besonders leicht zu erreichen.

Eine bevorzugte Ausführungsform der erfindungsgemäßen Gelenkstange zeichnet sich dadurch aus, dass an gegenüberliegenden Enden der Gelenkstange angeordnete flächig ausgebildete Endabschnitte im Wesentlichen parallel zueinander angeordnet sind.

Bevorzugte Ausführungsformen der erfindungsgemäßen Gelenkstange zeichnen sich dadurch aus, dass eine Ebene von wenigstens eines der flächig ausgebildeten Endabschnitte im Wesentlichen mit einer Querschnittsebene in Längsrichtung der Gelenkstange zusammenfällt oder zur Querschnittsebene in Längsrichtung der Gelenkstange einen Versatz aufweist.

Eine vorteilhafte Weiterbildung der erfindungsgemäßen Gelenkstange zeichnet sich dadurch aus, dass die flächig ausgebildeten Endabschnitte der Gelenkstange einen Winkelversatz zueinander aufweisen.

Mit all den oben genannten Maßnahmen kann eine Anpassung der Gelenkstange an konkrete Erfordernisse bzw. Gegebenheiten der Scheibenwischvorrichtung sehr individuell durchgeführt werden.

Eine vorteilhafte Weiterbildung der erfindungsgemäßen Gelenkstange zeichnet sich dadurch aus, dass die Kugelschale wenigstens ein integral mit der Kugelschale ausgebildetes Befestigungselement aufweist. Dadurch ist es auf einfache Weise möglich, die Kugelschale in dem Durchgangsloch der Gelenkstange zu befestigen.

Bevorzugt ist vorgesehen, dass das Befestigungselement als ein elastischer Haken ausgebildet ist. Dadurch sind ein einfaches Befestigen sowie ein fester und sicherer Sitz der Kugelschale in der Gelenkstange unterstützt.

Eine bevorzugte Ausführungsform der erfindungsgemäßen Gelenkstange zeichnet sich dadurch aus, dass die Gelenkstange in den flächig ausgebildete Endabschnitten jeweils mehrere Durchgangslöcher aufweist, wobei eine Anzahl der Durchgangslöcher und eine Anzahl der Befestigungselemente an eine mechanische Belastung der Gelenkstange bei einer bestimmungsgemäßen Verwendung angepasst ist. Dadurch ist vorteilhaft eine individuelle Anpassung der Gelenkstange an mechanische Belastungen bei ihrer bestimmungsgemäßen Verwendung in der Scheibenwischvorrichtung unterstützt.

Eine Weiterbildung der erfindungsgemäßen Gelenkstange ist dadurch gekennzeichnet, dass die Kugelschale mittels eines zusätzlichen, integral mit der Kugelschale ausgebildeten Zapfenelements fixiert oder fixierbar ist. Dadurch kann vorteilhaft eine größere Axialkraft auf die Kugelschale, und damit auf eine von der Kugelschale angetriebene Lagerplatte der Scheibenwischvorrichtung übertragen werden.

Eine bevorzugte Ausführungsform der erfindungsgemäßen Gelenkstange zeichnet sich dadurch aus, dass die Kugelschale offen oder geschlossen ausgebildet ist, wobei dem Typ der Kugelschale entsprechende Durchgangslöcher in den flächig ausgebildeten Endabschnitten vorgesehen sind. Auch auf diese Weise ist ein Gestaltungsspielraum für die erfindungsgemäße Gelenkstange vorteilhaft erhöht.

Eine bevorzugte Ausführungsform der erfindungsgemäßen Gelenkstange ist dadurch gekennzeichnet, dass die Gelenkstange wenigstens einen Knick aufweist. Auch mittels dieser Maßnahme ist ein Gestaltungsspielraum der erfindungsgemäßen Gelenkstange vorteilhaft erhöht. Mit dem rohrförmigen Grundmaterial lassen sich Knicke besonders einfach ausbilden.

Eine vorteilhafte Weiterbildung der erfindungsgemäßen Gelenkstange sieht vor, dass die Kugelschale aus einem elastischen Material, vorzugsweise einem Kunststoffmaterial gebildet ist. Dadurch ist vorteilhaft eine kostengünstige Fertigung der Kugelschale in großen Stückzahlen unterstützt.

Die Erfindung wird nachfolgend anhand von mehreren Figuren mit weiteren Merkmalen und Vorteilen detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren.

In den Figuren zeigt:
- Fig. 1: eine Scheibenwischvorrichtung gemäß Stand der Technik;
- Fig. 2: eine herkömmliche Gelenkstange einer Scheibenwischvorrichtung;
- Fig. 3: eine weitere Variante einer herkömmlichen Gelenkstange einer Scheibenwischvorrichtung; und
- Fig. 4: eine Detailansicht einer Ausführungsform der erfindungsgemäßen Gelenkstange.

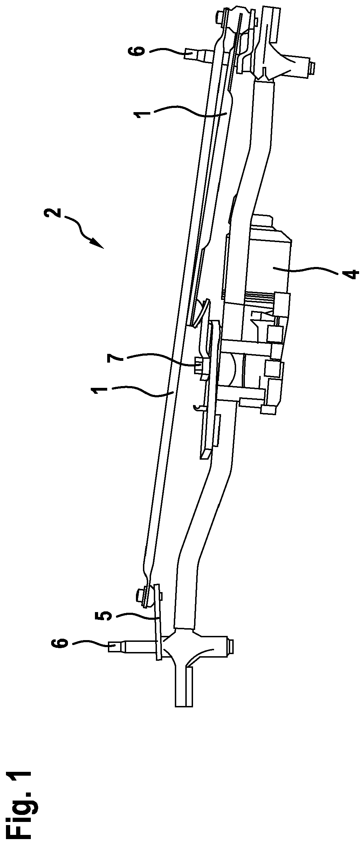

Fig. 1 zeigt eine herkömmliche Scheibenwischvorrichtung 2, vorzugsweise einer Frontscheibe eines Kraftfahrzeugs. Die Scheibenwischvorrichtung 2 weist einen elektrischen Wischermotor 4 mit einer Abtriebswelle 7 auf, wobei mittels der Abtriebswelle 7 ein Gestänge der Scheibenwischvorrichtung 2 angetrieben wird. Das Gestänge umfasst Gelenkstangen 1, die eine translatorisch-taumelnde Bewegung ausführen, wodurch Lagerplatten 5 und damit Antriebswellen 7 der Scheibenwischvorrichtung 2 mit periodisch wechselnden Drehrichtungen verdreht werden.

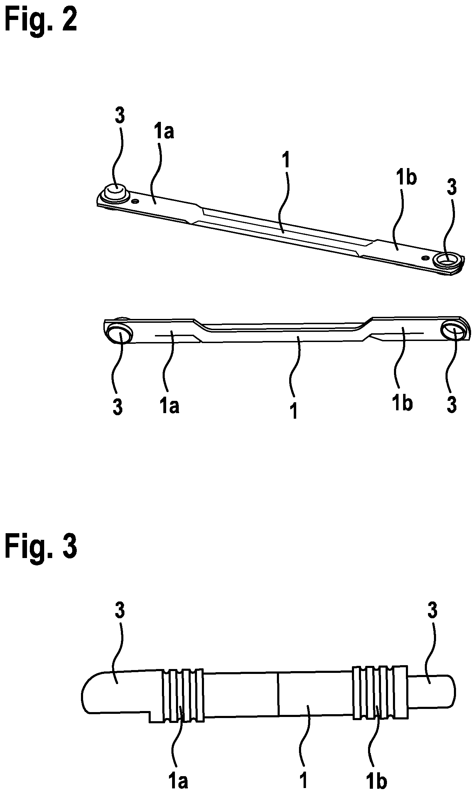

Fig. 2 zeigt in zwei Ansichten eine Variante einer herkömmlichen Gelenkstange 1. Die Gelenkstange 1 ist aus einem länglichen, im Wesentlichen flachen Metallteil gebildet, der in einem Mittelbereich als ein U-förmiges Profil ausgebildet ist. In Endabschnitten 1a, 1b der Gelenkstange 1 sind Durchgangslöcher in der Gelenkstange 1 ausgebildet, wobei aus Kunststoff gefertigte Kugelschalen 3 in die Durchgangslöcher eingespritzt sind. Die Kugelschalen 3 können je nach Applikation als geschlossene oder als offene Kugelschalen 3 ausgebildet sein. Eine Länge der in den Figuren 1 und 2 gezeigten herkömmlichen Gelenkstangen ist in einem Bereich von ca. 200 mm bis ca. 1 m.

Fig. 3 zeigt eine weitere Variante einer bekannten Gelenkstange 1. Die Gelenkstange 1 weist ein rohrförmiges Material auf, wobei in den Endabschnitten 1a, 1b der Gelenkstange 1 Kugelschalen 3 auf die Endabschnitte 1a, 1b aufgesteckt werden. Zu einer besseren mechanischen Fixierung der Kugelschale 3 weisen die Kugelschalen 3 jeweils eine Hülse mit einer Profilierung auf, die an eine Profilierung der Gelenkstange 1 angepasst ist. Dadurch entsteht eine formschlüssige Verbindung und damit ein guter Sitz der Kugelschalen 3 auf der Gelenkstange 1.

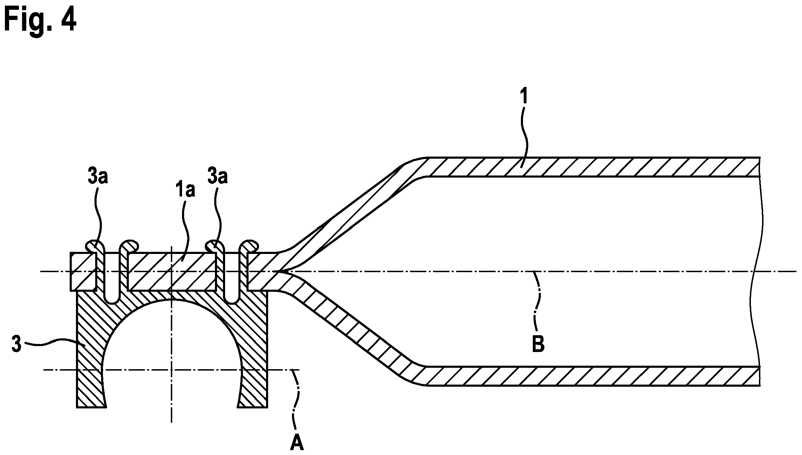

Fig. 4 zeigt eine Detailansicht einer Ausführungsform der erfindungsgemäßen Gelenkstange 1. Dargestellt ist eine in etwa mittige Querschnittsansicht durch einen Teilbereich der Gelenkstange 1 mit einem Endabschnitt 1a und einer Kugelschale 3. Nicht dargestellt ist ein zweiter Endabschnitt 1b mit einer darin fixierten Kugelschale 3. Im Folgenden wird nur der Endabschnitt 1a der Gelenkstange 1 beschrieben, es versteht sich aber von selbst, dass der Endabschnitt 1b in ähnlieher Weise wie der Endabschnitt 1a ausgebildet sein kann. Es ist erkennbar, dass die Gelenkstange 1 einen, beispielsweise durch einen Press- bzw. Quetschvorgang gefertigten, flächig ausgebildeten Endabschnitt 1a aufweist. In dem Endabschnitt 1a ist ein Durchgangsloch in beiden Rohrwandungen ausgebildet. Das Durchgangsloch kann beispielsweise mittels eines Stanz- oder Bohrungsvorgangs ausgebildet werden. Denkbar sind natürlich auch jegliche andere bekannte Arten einer Herstellung von Durchgangslöchern in Metallteilen.

Durch das genannte Loch wird nunmehr eine vorgefertigte Kugelschale 3 mittels mit der Kugelschale 3 integral ausgebildeten Befestigungselementen 3a fixiert. Die Befestigungselemente 3a können beispielsweise als Clips-Haken ausgebildet sein. Auf diese Weise entsteht eine festsitzende Verbindung der Kugelschale 3 auf der Gelenkstange 1. Zu einer Übertragung von größeren Kräften von der Kugelschale 3 auf den von der Kugelschale 3 geführten Kugelbolzen bzw. -zapfen (nicht dargestellt) kann die Kugelschale 3 auch ein zusätzliches Zapfenelement (nicht dargestellt) aufweisen, mittels dessen die Kugelschale 3 in dem Durchgangsloch zusätzlich fixiert wird.

Es ist natürlich auch denkbar, dass mehrere der genannten Durchgangslöcher in dem Endabschnitt 1a angeordnet sind, wobei eine Anzahl der Durchgangslöcher und eine Anzahl der Befestigungselemente 3a an eine mechanische Belastung der Gelenkstange 1 bei einer bestimmungsgemäßen Verwendung in der Scheibenwischvorrichtung 2 angepasst ist. Dadurch kann sehr individuell die Gestaltung der Gelenkstange 1 an ein konkretes Belastungsszenario in der Scheibenwischvorrichtung 2 angepasst werden.

In der Fig. 4 ist eine geschlossene Kugelschale 3 dargestellt. Um in der Gelenkstange 1 eine offene Kugelschale 3, welche jedoch nicht Teil der Erfindung darstellt, realisieren zu können, kann zusätzlich zu den gestanzten Clips- bzw. Zapfenbohrungen ein großes Durchgangsloch eingebracht werden, durch welches der Kugelbolzen bzw. der Kugelbereich der Kugelschale 3 durch den flächigen Endabschnitt 1a hindurchgesteckt werden kann. Unter Umständen, jedoch nicht unter den Gegenstand der Erfindung fallend, kann sogar der genannte Kugelbereich in das große Durchgangsloch eingeklemmt bzw. geclipst werden. Auf diese nicht zur Erfindung zählende Art und Weise kann die Kugelschale 3 in der Gelenkstange 1 auch offen ausgeführt werden.

Denkbar ist auch, dass die Gelenkstange 1 einen oder mehrere Knicke (nicht dargestellt) aufweist. Ferner ist auch möglich, dass für unterschiedliche mechanische Belastungen der Gelenkstange 1 bzw. Typen von Scheibenwischvorrichtungen 2 mehrere rohrförmige Grundmaterialien mit unterschiedlichen Durchmessern für die Gelenkstange 1 verwendet werden. Dadurch kann die Gelenkstange 1 bzw. ganze Fertigungsreihen von Gelenkstangen 1 sehr flexibel unterschiedlich konfiguriert werden.

Zweckmäßigerweise werden die beiden Rohrenden in der gleichen Ebene zusammengedrückt. Alternativ möglich ist aber auch, dass das rohrförmige Grundmaterial bei der Fertigung der Endabschnitte 1a, 1b asymmetrisch gequetscht wird, wodurch die Ebenen der Endabschnitte 1a und 1b und damit ein Abstand einer Kugelschalenmittellinie A gegenüber der Mittellinie B der Gelenkstange 1 einen definierbaren Versatz aufweist. Ferner denkbar ist auch, dass die beiden flächigen Endabschnitte 1a und 1b zueinander verdreht sind, d.h. einen vordefinierbaren Winkelversatz (nicht dargestellt) zueinander aufweisen.

Man erkennt also, dass eine große Vielfalt an unterschiedlichen Ausführungsformen mittels des Grundmaterials des metallischen Rohres und des Grundelements der separiert vorgefertigten Kugelschale 3 möglich ist. Vorzugsweise ist die Kugelschale 3 aus einem elastischen Material, beispielsweise aus einem Kunststoffmaterial gefertigt. Die Kugelschalen 3 können dadurch mittels Mehrfach-Spritzgusswerkzeugen mit sehr niedrigen Stückkosten hergestellt werden.

Es ist mittels der Erfindung also vorteilhaft möglich, eine große Vielfalt an unterschiedlichen Gelenkstangen 1 herzustellen, wobei eine Varianz der Gelenkstange 1 im Wesentlichen durch eine Länge der Gelenkstange 1 definiert ist. Im Vergleich zu herkömmlichen Gelenkstangen ist ein Einlegen der Gelenkstange 1 bzw. des Blechrohlings in ein Spritzgusswerkzeug vorteilhaft nicht notwendig.

Für das Rohrstück der Gelenkstange 1 kann kostengünstige Meterware verwendet werden. Es ist lediglich ein Ablängprozess (z.B. Sägen), sowie das Zusammendrücken des Rohrstücks zum Ausbilden der flächigen Endabschnitte 1a,1b und das Stanzen der Durchgangslöcher erforderlich. Ein Umbiegen des Blechs in ein U-Profil entfällt vorteilhaft. Vorteilhaft fallen dadurch keine zusätzlichen Werkzeugkosten bei unterschiedlichen Längenvarianten der Gelenkstange 1 an.

Zudem kann bei gleicher Belastbarkeit ein erheblicher Gewichtsvorteil von mehr als 25 % erzielt werden, was einer Verwendung der erfindungsgemäßen Gelenkstange in Leichtbauapplikationen entgegenkommt.

Der Zusammenbau der erfindungsgemäßen Gelenkstange ist durch simples Zusammenstecken von Einzelteilen (vorgeformtes Rohrmaterial und Kugelschalen 3) extrem vereinfacht. Auf diese Art und Weise kann ein Fertigungsprozess der erfindungsgemäßen Gelenkstange 1 durch eine Mehrfachverwendung von Werkzeugen bedeutend optimiert bzw. vereinfacht sein. Im Ergebnis können daraus in Summe vorteilhaft große Kosteneinsparungen resultieren.

Zusammenfassend wird mit der Erfindung eine kostengünstig und effizient herzustellende Gelenkstange, insbesondere für eine Scheibenwischvorrichtung eines Kraftfahrzeugs vorgeschlagen.

Der Fachmann wird erkennen, dass das erfindungsgemäße Prinzip für jegliche Art von Gelenkstange anwendbar ist, so dass die beschriebene Verwendung der Gelenkstange in einer Scheibenwischvorrichtung eines Kraftfahrzeugs lediglich als beispielhaft anzusehen ist. Selbst bei einer Verwendung von flachem Grundmaterial (z.B. Flachstahl) für die Gelenkstange, was jedoch nicht im Rahmen der Erfindung liegt, kann ein wesentlicher Teil der Erfindung nach den oben beschriebenen Prinzipien realisiert werden.

## Patentansprüche

1. Gelenkstange (1), insbesondere für eine Scheibenwischvorrichtung (2) eines Kraftfahrzeugs, wobei die Gelenkstange (1) im Wesentlichen rohrförmig ausgebildet ist, wobei Endabschnitte (1a, 1b) der Gelenkstange (1) im Wesentlichen flächig ausgebildet sind und wenigstens ein Endabschnitt (1a,1b) der Gelenkstange wenigstens ein Durchgangsloch aufweist, **dadurch gekennzeichnet, dass** in dem Durchgangsloch ein Befestigungselement (3a), insbesondere Clips-Haken, einer geschlossenen Kugelschale (3) mit einem Kugelbereich fixiert ist, wobei der Kugelbereich der Kugelschale (3) nicht durch den flächigen Endabschnitt (1a, 1b) durchgesteckt ist.

2. Gelenkstange (1) nach Anspruch 1, **dadurch gekennzeichnet, dass** die Gelenkstange (1) metallisch ausgebildet ist.

3. Gelenkstange (1) nach Anspruch 1 oder 2, **dadurch gekennzeichnet, dass** an gegenüberliegenden Enden der Gelenkstange (1) angeordnete flächig ausgebildete Endabschnitte (1a, 1b) im Wesentlichen parallel zueinander angeordnet sind

4. Gelenkstange (1) nach Anspruch 3, **dadurch gekennzeichnet, dass** eine Ebene von wenigstens eines der flächig ausgebildeten Endabschnitte (1a,1b) im Wesentlichen mit einer Querschnittsebene in Längsrichtung der Gelenkstange (1) zusammenfällt oder zur Querschnittsebene in Längsrichtung der Gelenkstange (1) einen Versatz aufweist.

5. Gelenkstange (1) nach einem der Ansprüche 1 bis 3, **dadurch gekennzeichnet, dass** die flächig ausgebildeten Endabschnitte (1a,1b) der Gelenkstange (1) einen Winkelversatz zueinander aufweisen.

6. Gelenkstange (1) nach einem der vorhergehenden Ansprüche, **dadurch gekennzeichnet, dass** die Kugelschale (3) wenigstens ein integral mit der Kugelschale (3) ausgebildetes Befestigungselement (3a) aufweist.

7. Gelenkstange (1) nach Anspruch 6, **dadurch gekennzeichnet, dass** das Befestigungselement (3a) als ein elastischer Haken ausgebildet ist.

8. Gelenkstange (1) nach Anspruch 6 oder 7, **dadurch gekennzeichnet, dass** die Gelenkstange (1) in den flächig ausgebildeten Endabschnitten (1a, 1b) jeweils mehrere Durchgangslöcher aufweist, wobei eine Anzahl der Durchgangslöcher und eine Anzahl der Befestigungselemente (3a) an eine mechanische Belastung der Gelenkstange (1) bei einer bestimmungsgemäßen Verwendung angepasst ist.

9. Gelenkstange (1) nach einem der Ansprüche 6 bis 8, **dadurch gekennzeichnet, dass** die Kugelschale (3) mittels eines zusätzlichen, integral mit der Kugelschale ausgebildeten Zapfenelements fixiert oder fixierbar ist.

10. Gelenkstange (1) nach einem der vorhergehenden Ansprüche, **dadurch gekennzeichnet, dass** die Kugelschale (3) offen oder geschlossen ausgebildet ist, wobei dem Typ der Kugelschale (3) entsprechende Durchgangslöcher in den flächig ausgebildeten Endabschnitten (1a,1 b) vorgesehen sind.

11. Gelenkstange (1) nach einem der vorhergehenden Ansprüche, **dadurch gekennzeichnet, dass** die Gelenkstange (1) wenigstens einen Knick aufweist.

12. Gelenkstange (1) nach einem der vorhergehenden Ansprüche, **dadurch gekennzeichnet, dass** die Kugelschale (3) aus einem elastischen Material, vorzugsweise einem Kunststoffmaterial gebildet ist.

13. Gelenkstange (1) nach einem der vorhergehenden Ansprüche, **dadurch gekennzeichnet, dass** ein Durchmesser eines Rohrmaterials der Gelenkstange (1) entsprechend zu einer mechanischen Belastung der Gelenkstange (1) bei einer bestimmungsgemäßen Verwendung ausgebildet ist.

14. Scheibenwischvorrichtung (2), insbesondere für ein Kraftfahrzeug, aufweisend einen Wischermotor (4) und ein vom Wischermotor (4) über eine Abtriebswelle (7) angetriebenes Gestänge mit einer Gelenkstange (1) nach einem der Ansprüche 1 bis 13.

## Claims

1. Joint rod (1), in particular for a windscreen wiper device (2) of a motor vehicle, wherein the joint rod (1) is of substantially tubular design, wherein end portions (1a, 1b) of the joint rod (1) are of substantially flat design, and at least one end portion (1a, 1b) of the joint rod has at least one through hole, **characterized in that** a fastening element (3a), in particular clip hook, of a closed ball socket (3) is fixed with a ball region in the through hole, wherein the ball region of the ball socket (3) is not plugged through the flat end portion (1a, 1b).

2. Joint rod (1) according to Claim 1, **characterized in that** the joint rod (1) is metallic.

3. Joint rod (1) according to Claim 1 or 2, **characterized in that** end portions (1a, 1b) which are arranged at opposite ends of the joint rod (1) and are of flat design are arranged substantially parallel to each other.

4. Joint rod (1) according to Claim 3, **characterized in that** a plane of at least one of the end portions (1a, 1b) of flat design substantially coincides with a cross-sectional plane in the longitudinal direction of the joint rod (1) or has an offset with respect to the cross-sectional plane in the longitudinal direction of the joint rod (1).

5. Joint rod (1) according to one of Claims 1 to 3, **characterized in that** the end portions (1a, 1b) of flat design of the joint rod (1) are angularly offset with respect to each other.

6. Joint rod (1) according to one of the preceding claims, **characterized in that** the ball socket (3) has at least one fastening element (3a) formed integrally with the ball socket (3).

7. Joint rod (1) according to Claim 6, **characterized in that** the fastening element (3a) is designed as an elastic hook.

8. Joint rod (1) according to Claim 6 or 7, **characterized in that** the joint rod (1) in each case has a plurality of through holes in the end portions (1a, 1b) of flat design, wherein a number of the through holes and a number of the fastening elements (3a) are adapted to a mechanical loading of the joint rod (1) during use as intended.

9. Joint rod (1) according to one of Claims 6 to 8, **characterized in that** the ball socket (3) is fixed or can be fixed by means of an additional pin element formed integrally with the ball socket.

10. Joint rod (1) according to one of the preceding claims, **characterized in that** the ball socket (3) is of open or closed design, wherein through holes corresponding to the type of ball socket (3) are provided in the end portions (1a, 1b) of flat design.

11. Joint rod (1) according to one of the preceding claims, **characterized in that** the joint rod (1) has at least one kink.

12. Joint rod (1) according to one of the preceding claims, **characterized in that** the ball socket (3) is formed from an elastic material, preferably a plastics material.

13. Joint rod (1) according to one of the preceding claims, **characterized in that** a diameter of a tubular material of the joint rod (1) is formed in a manner corresponding to a mechanical loading of the joint rod (1) during use as intended.

14. Windscreen wiper device (2), in particular for a motor vehicle, having a wiper motor (4) and a linkage which is driven by the wiper motor (4) via an output shaft (7) and has a joint rod (1) according to one of Claims 1 to 13.

## Revendications

1. Barre articulée (1), notamment pour un dispositif d'essuie-glace (2) d'un véhicule automobile, la barre articulée (1) étant réalisée pour l'essentiel en forme de tube, les sections d'extrémité (1a, 1b) de la barre articulée (1) étant réalisées de façon pour l'essentiel plane et au moins une section d'extrémité (1a, 1b) de la barre articulée comportant au moins un trou traversant, **caractérisé en ce qu'**un élément de fixation (3a), notamment des crochets enclipsables, d'une coque sphérique (3) fermée sont fixés dans un trou traversant avec une région sphérique, la région sphérique de la coque sphérique (3) n'étant pas enfichée à travers la section d'extrémité plane (1a, 1b).

2. Barre articulée (1) selon la revendication 1, **caractérisée en ce que** la barre articulée (1) est réalisée en métal.

3. Barre articulée (1) selon la revendication 1 ou 2, **caractérisée en ce que** des sections d'extrémité (1a, 1b) réalisées de façon plane et disposées au niveau des extrémités opposées de la barre articulée (1) sont disposées pour l'essentiel parallèlement l'une par rapport à l'autre.

4. Barre articulée (1) selon la revendication 3, **caractérisée en ce qu'**un plan d'au moins une des sections d'extrémité (1a, 1b) réalisées de façon plane coïncide pour l'essentiel avec un plan en section transversale dans la direction longitudinale de la barre articulée (1) ou comporte un décalage dans la direction longitudinale de la barre articulée (1) par rapport au plan en section transversale.

5. Barre articulée (1) selon l'une quelconque des revendications 1 à 3, **caractérisée en ce que** les sections d'extrémité (1a, 1b) réalisées de façon plane de la barre articulée (1) présentent un décalage angulaire l'une par rapport à l'autre.

6. Barre articulée (1) selon l'une quelconque des revendications précédentes, **caractérisée en ce que** la coque sphérique (3) comporte au moins un élément de fixation (3a) faisant partie intégrante de la coque sphérique (3).

7. Barre articulée (1) selon la revendication 6, **caractérisée en ce que** l'élément de fixation (3a) est réalisé sous la forme d'un crochet élastique.

8. Barre articulée (1) selon la revendication 6 ou 7, **caractérisée en ce que** la barre articulée (1) comporte respectivement plusieurs trous traversants dans les sections d'extrémité (1a, 1b) réalisées de façon plane, le nombre de trous traversants et le nombre d'éléments de fixation (3a) étant adaptés en fonction de la sollicitation mécanique de la barre articulée (1), pour une utilisation adaptée à la finalité.

9. Barre articulée (1) selon l'une quelconque des revendications 6 à 8, **caractérisée en ce que** la coque sphérique (3) est fixée ou peut être fixée à l'aide d'un élément à tenon supplémentaire faisant intégralement partie de la coque sphérique.

10. Barre articulée (1) selon l'une quelconque des revendications précédentes, **caractérisée en ce que** la coque sphérique (3) est réalisée de façon ouverte ou fermée, des trous traversants correspondant au type de coque sphérique (3) étant prévus dans les sections d'extrémité (1a, 1b) réalisées de façon plane.

11. Barre articulée (1) selon l'une quelconque des revendications précédentes, **caractérisée en ce que** la barre articulée (1) comporte au moins un coude.

12. Barre articulée (1) selon l'une quelconque des revendications précédentes, **caractérisée en ce que** la coque sphérique (3) est formée à partir d'une matière élastique, de préférence d'une matière plastique.

13. Barre articulée (1) selon l'une quelconque des revendications précédentes, **caractérisée en ce qu'**un diamètre de la matière du tube de la barre articulée (1) est réalisé en fonction d'une sollicitation mécanique de la barre articulée (1), pour une utilisation adaptée à la finalité.

14. Dispositif d'essuie-glace (2), notamment pour un véhicule automobile, comportant un moteur d'essuieglace (4) et une tringle entraînée par le moteur d'essuie-glace (4), via un arbre d'entraînement en sortie (7), ladite tringle étant équipée d'une barre articulée (1) selon l'une quelconque des revendications 1 à 13.
